# EUROPEAN PATENT APPLICATION

(11) **EP 4 714 708 A1**
(43) Date of publication of application: **25.03.2026**
(21) Application number: 24201502.2
(22) Date of filing: 19.09.2024
(51) Int. Cl.: B60K 6/48, B60L 50/15, B60W 20/16, B60L 3/12, B60L 58/12

(54) **A VEHICLE CONTROL SYSTEM AND METHOD FOR BATTERY SOX MANAGEMENT**

(71) Applicant: Ford Global Technologies, LLC, Dearborn, MI 48126 (US)
(72) Inventor: COX, David, London, SE16 5XJ (GB); HESKETH, David, Ingatestone, CM4 9LN (GB); TURNER, Paul Nigel, Chelmsford, CM2 8NH (GB); HARTMANN, Bastian, 50354 Hürth (DE)
(74) Representative: HG Law International LLP

(57) **Abstract**

The present disclosure relates to a vehicle control system and method for SoX management. The vehicle control system comprises a control circuitry and a battery management system. The control circuitry determines an operational schedule of the vehicle and monitors at least one parameter of battery state. The battery management unit is communicatively coupled to the control circuitry. The battery management unit defines and implements an adaptive battery threshold window based on an operational schedule of the vehicle and the at least one parameter of battery state. The adaptative battery threshold window comprises multiple soft threshold values.

## Description

### Background

**The** present disclosure relates to a vehicle control system and method. Particularly, but not exclusively, the present disclosure relates to a vehicle control system and method for battery SoX management.

### Summary

Electric vehicles (EVs) have become increasingly prevalent as a more sustainable alternative to conventional internal combustion engine vehicles. Central to the performance of EVs is the battery management system, which is responsible for monitoring and controlling the battery's SoX. While accurate SoX estimation is an important factor, the implementation of a strategic SoX management approach is also important. Existing systems use algorithms for SoX management, but it is desired to enhance such algorithms so that they might adapt dynamically to varying driving conditions, battery states, and environmental factors, thereby balancing energy efficiency, battery lifespan, etc., under different operational scenarios. As such, an advanced SoX management strategy is desired that can integrate real-time adaptive controls, advanced predictive algorithms, and responsive adjustments based on real-world driving conditions.

An object of the present disclosure is to provide a vehicle control system and a method for enabling optimized energy use, extending battery life, and enhancing overall vehicle performance by implementing precise and context-aware SoX adjustments, thus satisfying the needs of future EV technology.

According to the systems and the methods, described herein, there is provided a vehicle control system. The vehicle control system comprises a control circuitry and a battery management unit. The vehicle control system determines an operational schedule of the vehicle and monitors at least one parameter of battery state. The battery management unit is communicatively coupled to the control circuitry. The battery management unit defines and implements an adaptive battery threshold window based on an operational schedule of the vehicle and the at least one parameter of battery state. The adaptative battery threshold window comprises at least one soft threshold value, e.g., multiple soft threshold values.

In some examples, the adaptive battery threshold window sits within (or is aligned with) a total usable energy window of a battery of the vehicle, a minimum-maximum battery state of charge window and a high-low battery state of charge window.

In some examples, the adaptive battery threshold window defines a proportion of a total usable energy of a battery of the vehicle that is available for use by a set of vehicle operations. Each vehicle operation in the set of vehicle operations has an associated priority ranking that is variable as the battery threshold window adapts.

In some examples, the adaptive battery threshold window is at least one of a battery state of charge threshold window, battery state of energy threshold window, or battery state of health threshold window.

In some examples, the control circuitry is communicatively coupled to a sensor module to monitor at least one of a temperature of an after-treatment unit, vehicle usage associated with a driver, or a selected driving mode, and determine the operational schedule of the vehicle.

For example, for drivers exhibiting one type of driving behaviour, such as sporty operation of the vehicle, the battery management unit increases the lower SoX threshold to ensure that more charge is reserved for energy-intensive operations. By estimating operational functions like frequent power requests, e.g., for accelerating the vehicle, the battery management unit recalibrates the SoX to retain additional energy buffers. This adaptation allows the vehicle to respond more effectively to sudden high-power demands, while minimizing battery depletion during unpredictable driving patterns.

In some examples, the battery management unit modifies the adaptive battery threshold window based on a change in the determined operational schedule of the vehicle, and/or a change in the least one determined parameter of battery state. The vehicle usage comprises at least one of an interaction with the vehicle, driving behaviour, or a driving trend of the driver learned using a machine learning algorithm over a predetermined period.

For example, over the time, the battery management unit analyze and learn from the driver's driving patterns, such as average speed, acceleration tendencies, and frequency of long trips versus short commutes. For a driver who consistently drives conservatively, with smooth accelerations and consistent short-distance trips, the system expands the threshold window to optimize energy efficiency. Conversely, if the driver demonstrates a preference for long-distance travel or frequent rapid accelerations, the system narrows the threshold window to ensure sufficient energy reserves for higher power demands. This long-term, adaptive adjustment allows the vehicle to intelligently manage battery charge cycles, reducing wear while enhancing performance, based on the driver's accumulated behavioural data.

In some examples, the operational schedule of the vehicle includes timing, priority, and duration of at least one vehicle function including normal transient torque supplementation (TTS), regenerative braking, transient torque boost (TTB), transient torque supplementation (TTS), torque substitution, coolant conditioning, fuel economy assistance, or heating of an after-treatment unit.

In some examples, the at least one parameter of the battery state includes at least one of a current state of charge, state of health, state of energy, cell temperature, overall battery temperature or battery usage history.

In some examples, the battery management unit stores (or otherwise accesses) at least one driver profile including driver identification data, adaptive battery threshold window for the driver, and at least one of vehicle usage, or a desired driving mode of the driver. The battery management system further identifies a current (or future) driver, and modifies the adaptive battery threshold window based on the driver profile of the identified driver.

For example, if a vehicle is driven by three drivers-Driver A, Driver B, and Driver C, the battery management unit adapts the threshold window based on the identified driver. When Driver A is identified, the system lowers the soft threshold, since A drives conservatively, with smooth accelerations and shorter trips. This adjustment helps preserve battery life and optimize energy efficiency because A's driving style doesn't demand high power. When Driver B takes over, the system raises the soft threshold to ensure the battery has enough charge for B's frequent long trips and rapid accelerations. This ensures there is sufficient energy for high-performance driving. For Driver C, with a more balanced style, who sometimes making short trips and other times driving longer distances, triggers the battery management unit to adjust the threshold for balancing efficiency and performance depending on recent driving habits. Based on detection of a switch between the drivers, the battery management unit automatically adjusts the threshold to fit each driver's unique style, ensuring the battery is managed efficiently and performance is optimized.

According to the system and the method, described herein, there is provided a vehicle control method. The method comprises the steps of (a) determining an operational schedule of the vehicle, (b) monitoring at least one parameter of battery state; (c) defining an adaptive battery threshold window based on the determined operational schedule of the vehicle and the at least one parameter of battery state; and (d) implementing the adaptive battery threshold window, wherein the adaptive battery threshold window comprises at last one soft threshold, e.g., multiple soft threshold values.

In some examples, the method comprises adjusting the adaptive battery threshold window based on at least one of a determined change in the operational schedule of the vehicle or a determined change at least one parameter of battery state.

In some examples, the multiple soft threshold values include a first soft threshold value and a second soft threshold value that are each variable based on the operational schedule of the vehicle and the at least one parameter of battery state. The first soft threshold value is variable to a value greater than or equal to a low battery threshold value, and the second soft threshold value is variable to a value lesser than or equal to a high battery threshold value.

In some examples, the step of determining the operational schedule of the vehicle comprises monitoring at least one of a temperature of an after-treatment unit, vehicle usage of a driver, or a selected driving mode, and determining the operational schedule of the vehicle based on the at least one of the temperature of the after-treatment unit, vehicle usage of the driver, or the selected driving mode. The step of monitoring the vehicle usage comprises learning at least one of an interaction with the vehicle, driving behaviour, or driving trend of the driver over a predetermined period using a machine learning algorithm.

In some examples, the step of implementing the adaptive battery threshold window comprises defining at least one trigger based on the battery threshold value reaching the at least one of the multiple soft threshold values. The at least one trigger includes sending an alert to the driver or setting up a battery reserve to support at least one of transient torque boost (TTB), transient torque supplementation (TTS), torque substitution, cranking reserve, heating of an after-treatment unit, or regenerative braking.

Another object of the present disclosure is to enhance battery life by adjusting, e.g., dynamically adjusting, the threshold window based on customer usage patterns. For light users, the battery threshold window is expanded, allowing the battery to operate within an extended range, thereby increasing the availability of hybrid functions such as fuel economy or performance enhancements. For extreme users, the threshold window is restricted, thereby preventing operation near the low or high SoX. This adjustment ensures that the battery remains centered within an optimal SoX range, further reducing hitting or exceeding SoX limits. Additionally, for extreme users, this restricted window reserves energy at the lower end of the SoX spectrum, providing sufficient energy for functions such as cold starts, including but not limited to after-treatment conditionings and other similar functions.

### Brief Description of the Drawings

**The** above and other objects and advantages of the disclosure will be apparent upon consideration of the following detailed description, taken in conjunction with the accompanying drawings, in which like reference characters refer to like parts throughout, and in which:
FIG. 1 illustrates a vehicle control system, in accordance with some examples of the present disclosure;
FIG. 2 illustrates a vehicle control system, in accordance with some examples of the present disclosure;
FIG. 3a illustrates a SoX mapping of vehicle battery, in accordance with examples of the present disclosure;
FIG. 3b illustrates a SoX mapping of vehicle battery, in accordance with examples of the present disclosure;
Fig. 3c illustrates a SoX mapping of vehicle battery, in accordance with examples of the present disclosure;
FIG. 4 illustrates a vehicle control method, in accordance with some examples of the present disclosure; and
FIG. 5 illustrates a vehicle control method, in accordance with some examples of the present disclosure.

### Detailed Description of the drawings

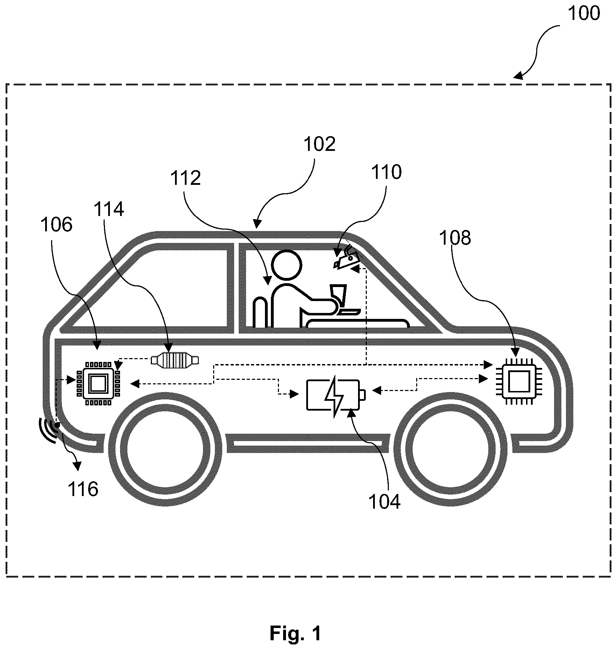

FIG.1 illustrates a vehicle control system (100). The vehicle control system comprises a vehicle (102). The vehicle (102) includes at least one of a mild hybrid electric vehicle, a plug-in hybrid electric vehicle, or a full hybrid electric vehicle. The vehicle (102) includes a battery (104), a control circuitry (106), a battery management unit (108), a sensor module (110, 116) and an after-treatment unit (114).

**The** battery (104) includes but is not limited to a Lithium-ion (Li-ion) Battery, Lead Acid Battery, Nickel-Metal Hydride (NIMH) Battery, Nickel-Cadmium (NiCd) Battery, etc. The type of battery (104) significantly influences the vehicle's (102) efficiency, range, and overall driving experience.

For example, in a mild hybrid electric vehicle (102), the battery (104) primarily supports the internal combustion engine by providing additional power when needed and helping with regenerative braking. In contrast, a plug-in hybrid electric vehicle (102) relies more heavily on its battery (104), which can be charged from an external source, enabling longer electric-only driving ranges. A full hybrid electric vehicle (102) utilizes the battery (104) to power the vehicle (102) independently for shorter distances while seamlessly transitioning between electric and combustion power as needed.

The control circuitry (106) may be integrated within the vehicle (102). The control circuitry (106) is responsible for managing the overall operations of all the components of the vehicle (102). The control circuitry (106) can be any commercially available processor or a cloud system. The control circuitry (106) can also be implemented as a digital signal processor (DSP), a controller, a microcontroller, a designated system on chip (SoC), an integrated circuit implemented with a field programmable gate array (FPGA), an application-specific integrated circuit (ASIC), or a combination thereof.

The control circuitry (106) is communicatively coupled to a sensor module (110, 116). The sensor module (110, 106) may include but is not limited to a torque sensor, a brake sensor, a temperature sensor, a fuel sensor or a combination thereof to determine at least one vehicle (102) function. The vehicle (102) function includes but is not limited to normal transient torque supplementation (TTS), regenerative braking, transient torque boost (TTB), transient torque supplementation (TTS), torque substitution, coolant conditioning, fuel economy assistance, or heating of an after-treatment unit.

**The** sensor module (110, 116) monitors at least one of a temperature of an after-treatment unit (114), vehicle usage of a driver (112), or a selected driving mode. The sensor module (110, 116) captures real-time data on the driver's (112) behaviour, including factors such as driving habits, acceleration patterns, and usage of vehicle (102) controls. The sensor module (110, 116) provides data, e.g., real-time data, on the after-treatment unit's temperature essential for maintaining optimal emission control and performance. This comprehensive monitoring enables the control circuitry (106) to dynamically adjust the battery management strategies and operational thresholds, ensuring efficient vehicle (102) operation and enhanced performance based on the current and/or anticipated conditions.

The vehicle usage comprises at least one of an interaction with the vehicle (102), driving behaviour, or a driving trend of the driver (112) learned using a machine learning algorithm over a predetermined period. The interaction with the vehicle (102) involves examining how frequently and in what manner drivers engage with vehicle controls and features. The driving behaviour refers to the mode in which the driver operates the vehicle (102), such as sport mode or economy mode. The selected mode defines the vehicle's (102) performance and maintenance needs. The driving trends of the driver (112) are learned using machine learning algorithms over a predetermined period to identify patterns and predict future behaviour. The machine learning algorithms analyse historical data to understand and anticipate driving habits, which helps personalise recommendations for vehicle (102) maintenance, and enhance the overall driving experience.

**The** control circuitry (106) determines an operational schedule of the vehicle (102) and monitors at least one parameter of battery (104) state. The operational schedule of the vehicle (102) includes timing, priority, and duration of the at least one vehicle function.

The normal transient torque supplementation (TTS) temporarily boosts engine torque to enhance performance during transient driving conditions, such as merging onto a highway. The control circuitry (106) determines the timing and duration of this torque supplementation to balance performance with efficiency.

The regenerative braking recovers energy during braking and converts the recovered energy back into electrical energy for recharging the battery (104). The control circuitry (106) determines when regenerative braking is applied and adjusts the intensity based on factors like vehicle (102) speed and braking force.

The transient torque boost (TTB) provides an extra burst of power for short periods to enhance vehicle (102) responsiveness. The control circuitry (106) schedules the torque boost based on the vehicle's (102) operational demands.

The coolant conditioning maintains optimal engine performance, prevents overheating, and controls the temperature of the engine coolant. The operational schedule determined by the control circuitry (106) ensures that coolant conditioning is applied as needed based on engine temperature and driving conditions.

The fuel economy assistance optimizes fuel consumption by adjusting driving parameters and engine settings to enhance overall fuel efficiency. The control circuitry (106) schedules this function to maximize fuel economy during conditions where high performance is not required.

**The** heating of an after-treatment unit (114) is for vehicles (102) with after-treatment systems such as catalytic converters or diesel particulate filters, heating may be necessary to ensure proper operation and emissions control. The operational schedule determined by the control circuitry (106) manages the timing and duration of heating to ensure the after-treatment unit (114) functions effectively.

The at least one parameter of the battery (104) state includes at least one of a current state of charge, state of health, state of energy, cell temperature, overall battery (104) temperature or battery (104) usage history. The current state of charge indicates the percentage of energy currently stored in the battery (104) relative to the total capacity, which is essential for determining how much power is available at any given time. The state of health indicates the battery's (104) overall condition compared to the original state, reflecting factors like capacity loss and degradation that occur over time due to usage and ageing. The state of energy measures the amount of usable energy available in the battery (104).

The cell temperature and overall battery (104) temperature are important for understanding the thermal environment of the battery (104), such as battery performance in hot or cold environments. Battery (104) usage history provides a detailed record of charge and discharge cycles, peak loads, and operational conditions, offering valuable insights into how the battery (104) has been used over time and helping to predict future performance and potential issues.

The control circuitry (106) determines the operational schedules when specific functions should be activated. The determination includes optimal conditions to engage or disengage the vehicle functions based on driving conditions, such as when to initiate regenerative braking during deceleration or when to activate coolant conditioning for engine temperature management. The operational schedule is determined by the control circuitry (106), which indicates the priority of various vehicle (102) functions based on their current vehicle (102) needs. For instance, during high-performance scenarios, transient torque boost (TTB), or transient torque supplementation (TTS) may be prioritized to enhance acceleration, while fuel economy assistance may be emphasized during steady cruising to enhance efficiency. The control circuitry (106) also controls or manages how long each function remains active. For example, regenerative braking may be employed for a set duration during braking events, while coolant conditioning might be adjusted based on engine temperature needs over longer periods.

The battery management unit (108) is communicatively coupled to the control circuitry (106). The battery management unit (108) defines and implements an adaptive threshold window based on an operational schedule of the vehicle (102) and the at least one parameter of the battery (104) state. The adaptative battery threshold window comprises multiple soft threshold values.

In some examples, the adaptive battery threshold window is adjusted based on at least one of a determined change in the operational schedule of the vehicle (102) or a determined change at least one parameter of the battery (104) state.

The adaptive battery threshold window sits within a total usable energy window of the battery (104) of the vehicle (102), a minimum-maximum battery (104) state of charge window and a high-low battery (104) state of charge window.

Alternatively, the adaptive battery threshold window defines a proportion of a total usable energy of the battery (104) of the vehicle (102) that is available for use by a set of vehicle (102) operations. For example, the battery (104) has a lowest and highest charging range within which the battery (104) operates to maintain efficiency and longevity.

Each vehicle (102) operation in the set of vehicle operations has an associated priority ranking that is variable as the battery threshold window adapts. This dynamic prioritization process ensures that essential vehicle (102) functions have access to the necessary resources even when the battery (104) is operating near its limits. For example, during periods of low battery (104) charge, the system (100) might elevate the priority of operations and features while temporarily reducing the priority of non-essential functions. This adaptive approach not only enhances overall vehicle (102) performance to enhance user experience but also enhances the battery (104) performance.

The adaptive battery threshold window is at least one of a battery state of charge threshold window, battery state of energy threshold window, or battery state of health threshold window. The state of charge threshold window pertains to the range of charge levels within which the battery (104) operates efficiently, centering state of charge distribution to enhance battery durability or maintain battery health. The state of energy threshold window focuses on the battery's (104) available energy and adjusts thresholds to ensure that the energy reserves are utilized effectively based on current and anticipated demands. The battery state of health threshold window monitors the overall health and degradation of the battery (104), adapting thresholds to reflect the battery's (104) capacity and performance over time. By dynamically adjusting the threshold windows, the battery management unit (108) optimizes performance and extends battery (104) life.

The battery management unit (108) modifies the adaptive battery threshold window based on a change in the determined operational schedule of the vehicle (102), or a change in the least one determined parameter of the battery (104) state. This adjustment ensures that the battery (104) operates within optimal limits, enhancing both performance and longevity. For example, if the vehicle's (102) driving patterns shift such as changes in daily usage or charging routines, the battery management unit (108) recalibrates the thresholds to align with the new changes or routines. Similarly, if an alteration in the battery's (104) state metrics is detected, such as deterioration in capacity or temperature changes, the battery management unit (108) adapts the thresholds accordingly. By continuously monitoring these factors and making real-time adjustments, the battery management unit (108) helps to maintain efficient battery performance and extends the overall lifespan of the vehicle's (102) battery system.

The battery management unit (108) stores at least one driver profile including driver identification data, adaptive battery threshold window for the driver (112), and at least one vehicle usage, or a desired driving mode of the driver (112). The battery management unit (108) identifies the current user and modifies the adaptive battery threshold window based on a driver profile of the identified driver (112).

When the system (100) identifies the current driver (112), the system (100) uses the stored profile to tailor the battery management strategy. The identification process ensures that the system (100) accurately applies the driver-specific settings to the current driving session. Once the driver (112) is identified, the battery management unit (108) modifies the adaptive battery threshold window according to the parameters set in the driver profile. This modification allows the battery management unit (108) to dynamically respond to the driver's (112) behaviour and preferences. For example, if the driver (112) is known to frequently engage in high-performance driving i.e., sports mode or requires extended driving range, the system (100) adjusts the threshold to support the needs by optimizing power output or ensuring availability of sufficient energy reserve. Conversely, if the driver's profile suggests a preference for energy conservation or frequent short trips i.e., economy mode, the threshold is adjusted to enhance efficiency. By integrating these personalized adjustments, the system (100) ensures that battery (104) performance is optimized, leading to enhanced energy efficiency, extending battery (104) life, and a more comfortable driving experience that aligns with individual drivers (112).

For example, the said adjustments ensure that the battery remains centered within a SoX range, ensuring operation within SoX limits. Additionally, for extreme users, this restricted window reserves energy at the lower end of the SoX spectrum, providing sufficient energy for functions such as cold starts, including but not limited to after-treatment conditionings and other similar functions.

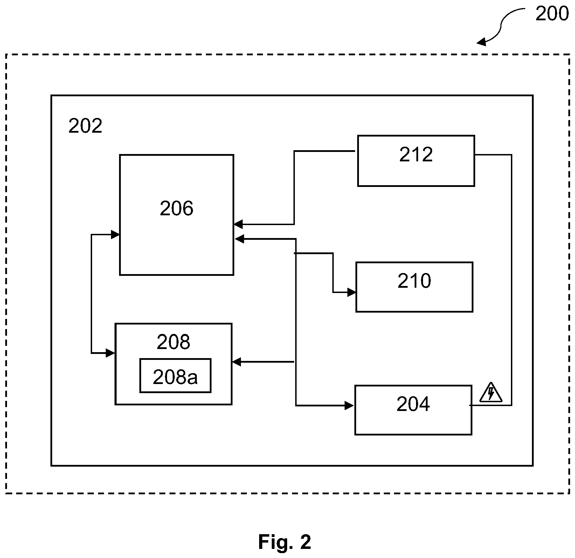

FIG.2 illustrates a vehicle control system (200). The vehicle control system comprises a vehicle (202), a battery (204), a control circuitry (206), a battery management unit (208), a sensor module (210) and an after-treatment unit (212).

The construction and functionality of the system (200) are similar to the system (100) discussed in FIG.1. The only difference between FIG.1 and FIG.2 is that the battery management unit (208) in FIG. 2 includes a memory (208a). The detailed explanation of the other components in FIG. 2, is discussed above and therefore is not discussed here again.

**The** memory (208a) may further include the at least one memory may include any of the volatile memory elements (for example, random access memory, such as DRAM, SRAM, SDRAM, etc.), non-volatile memory elements (for example, ROM, hard drive, etc.), other storage media or combinations thereof. The memory (208a) may have a distributed architecture, where various components are situated remotely from one another but can be accessed by the battery management unit (208). The prestored set of instructions in the memory (208a) can include one or more software programs, and algorithms, each of which includes an ordered listing of executable instructions for implementing logical functions.

**The** memory (208a) stores a wide array of essential data, including driver profiles, adaptive battery threshold settings, vehicle usage statistics, and other relevant parameters. The primary function of the memory (208a) is to retain detailed records of driver-specific information, which may include driver identification data, personalized battery (204) thresholds, and historical driving patterns. By maintaining this data, the memory (208a) enables the system (200) to quickly retrieve and apply the appropriate settings whenever a driver is identified, ensuring that the battery management unit (208) dynamically modifies the settings to match the driver's preferences and behaviours. The memory (208a) also supports the system's (200) ability to learn from and adapt to driving trends over time, contributing to optimized battery (204) performance and efficiency.

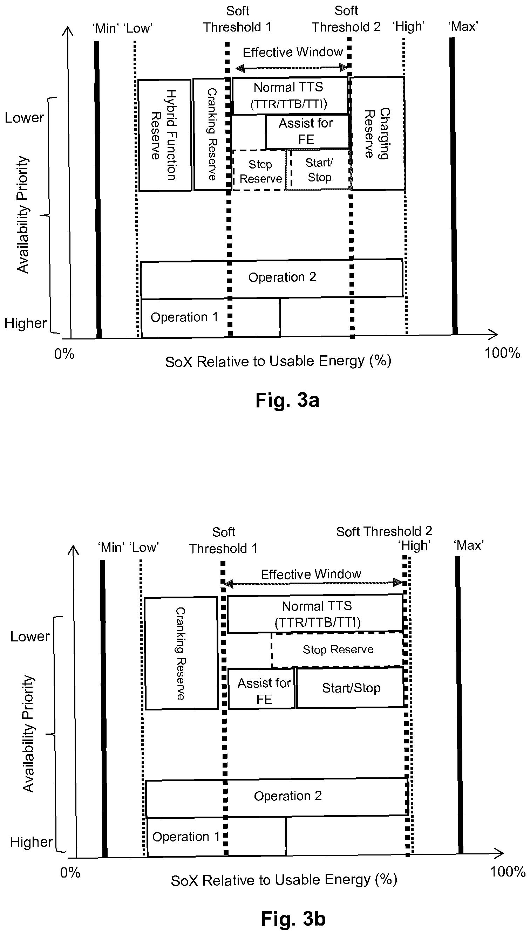

**As** illustrated in fig. 3a and fig. 3b, the multiple soft threshold values include a first soft threshold value and a second soft threshold value that are each variable based on the operational schedule of the vehicle and the at least one parameter of battery state. The first soft threshold value is variable to a value greater than or equal to a low battery threshold value. This ensures that the battery's charge does not fall below a predetermined level where performance could be compromised. The second soft threshold value is variable to a value lesser than or equal to a high battery threshold value. This upper threshold helps prevent overcharging or excessive battery stress, maintaining battery health and efficiency. By dynamically varying these thresholds within their respective bounds, the system optimizes battery management to balance between maintaining sufficient energy reserves and mitigating overcharging.

Fig. 3a illustrates that in certain user select modes, such as sport or delivery assist mode, the system adjusts the state of charge (SoC) set point to operate within two new soft limits. These soft limits are strategically defined to reserve a portion of the battery's energy or available capacity specifically to support hybrid functions . This adjustment plays a part when accommodating for more aggressive driving styles, which may demand increased power from the battery. For example, Transient Torque Boost (TTB) or after-treatment conditioning/ heating functionalities may be required to address performance derates or comply with emissions regulations. Aggressive driving often necessitates higher brake power, therefore the system reserves battery capacity for either operation 1 (e.g., energy recuperation) or operation 2 (e.g., alternator power) to reclaim energy during braking to support the emissions standards.

For example, in sports mode or delivery assist mode, the vehicle's battery management unit sets the SoC set point to maintain between 20% and 80% capacity. This setup ensures that there is enough reserve capacity for high power demands and effective regenerative braking.

Fig. 3b also illustrates SoX mapping, but in a moderate aggressive mode, something in the middle of sports and economy mode. In this mode, the soft limits for SoC are configured to partially reserve additional battery capacity, modification in priority of vehicle functions such as stop reserve and fuel economy assist. For example, when the effective threshold window is broad, the battery management unit prioritize fuel economy assist, helping the engine with electric power to maximize fuel efficiency and performance. As the threshold window narrows down, the battery management unit starts conserving energy, gradually shifting toward "Stop Reserve" mode, limiting electric assistance and non-essential functions.

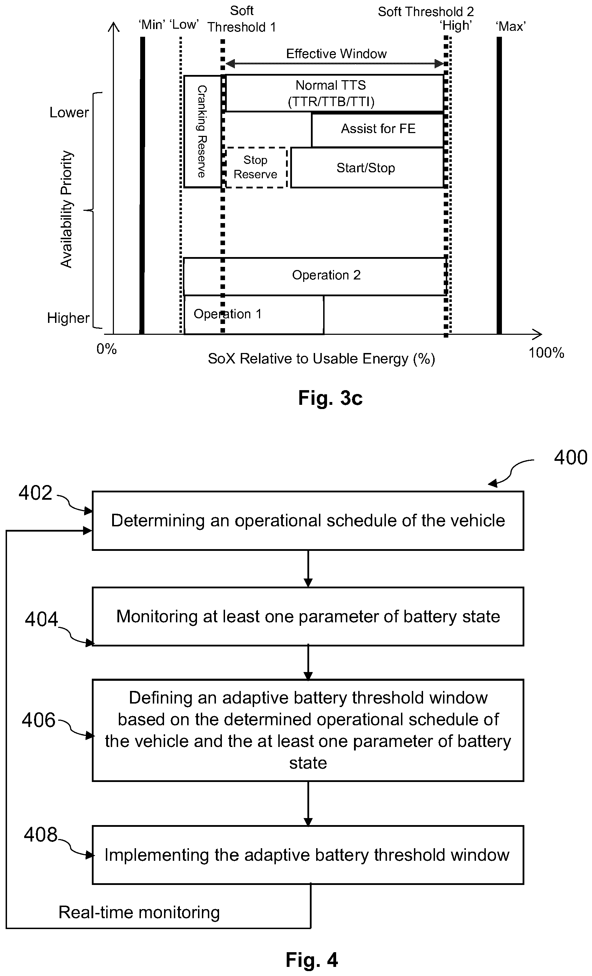

Fig. 3c illustrates that in less aggressive mode, such as economy drive mode, the battery management unit manages the SoC in a way that prioritizes efficiency over performance enhancements. In the economy drive mode, the soft limits for SoC are not configured to reserve additional battery capacity specifically for supporting emission control functions or mitigating performance derates. Instead, the focus shifts to optimizing the vehicle's traditional hybrid functions, such as energy recuperation and fuel efficiency.

For example, in economy drive mode, the vehicle's battery management unit sets the SoC soft limits to allow for a broader range of battery to be used from 10% to 90% of its capacity, without reserving additional capacity for performance needs.

Fig. 4 illustrates a method (400) for a vehicle control. The vehicle control method (400) comprises the following steps of determining (402) an operational schedule of the vehicle, monitoring (404) at least one parameter of battery state, defining (406) an adaptive battery threshold window based on the determined operational schedule of the vehicle and the at least one parameter of battery state, and implementing (408) the adaptive battery threshold window. The adaptive battery threshold window comprises multiple soft threshold values.

The operational schedule of the vehicle includes but is not limited to timing, priority, and duration of at least one vehicle function including normal transient torque supplementation (TTS), regenerative braking, transient torque boost (TTB), transient torque supplementation (TTS), torque substitution, coolant conditioning, fuel economy assistance, or heating of an after-treatment unit.

The at least one parameter of battery state includes at least one of a current state of charge, state of health, state of energy, cell temperature, overall battery temperature or battery usage history.

The method comprises adjusting the adaptive battery threshold window based on at least one of a determined change in the operational schedule of the vehicle or a determined change at least one parameter of battery state.

The multiple soft threshold values include a first soft threshold value and a second soft threshold value that are each variable based on the operational schedule of the vehicle and the at least one parameter of battery state. The first soft threshold value is variable to a value greater than or equal to a low battery threshold value, and the second soft threshold value is variable to a value lesser than or equal to a high battery threshold value.

The step of determining (402) of the operational schedule of the vehicle comprises monitoring at least one of a temperature of an after-treatment unit, vehicle usage of a driver, or a selected driving mode, and determining the operational schedule of the vehicle based on the at least one of the temperature of the after-treatment unit, vehicle usage of the driver, or the selected driving mode. Further, monitoring the vehicle usage comprises learning at least one of an interaction with the vehicle, driving behaviour, or driving trend of the driver over a predetermined period using a machine learning algorithm.

The step of implementing (408) the adaptive battery threshold window comprises defining at least one trigger based on the battery threshold value reaching the at least one of the multiple soft threshold values. The at least one trigger includes sending an alert to the driver or setting up a battery reserve to support at least one of transient torque boost (TTB), transient torque supplementation (TTS), torque substitution, cranking reserve, heating of an after-treatment unit, or regenerative braking.

The method (400) further comprises adjusting the adaptive battery threshold window based on at least one of a determined change in the operational schedule of the vehicle or a determined change at least one parameter of battery state during real-time monitoring even after the implementation of the threshold window.

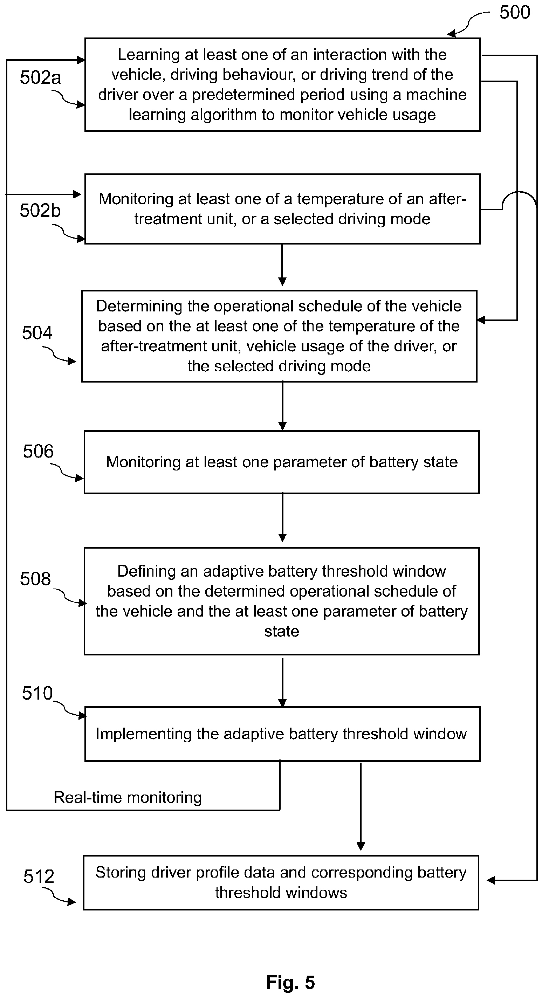

Fig. 5 illustrates a method (500) for a vehicle control. The vehicle control method (500) comprises the following steps of learning (502a) at least one of an interaction with the vehicle, driving behaviour, or driving trend of the driver over a predetermined period using a machine learning algorithm to monitor vehicle usage, monitoring (502b) at least one of a temperature of an after-treatment unit, or a selected driving mode, determining (504) the operational schedule of the vehicle based on the at least one of the temperature of the after-treatment unit, vehicle usage of the driver, or the selected driving mode, monitoring (506) at least one parameter of battery state, defining (508) an adaptive battery threshold window based on the determined operational schedule of the vehicle and the at least one parameter of battery state, implementing (510) the adaptive battery threshold window, and storing (512) driver profile data and corresponding battery threshold windows.

The above-stated descriptions are merely examples of implementations of this application but are not intended to limit the protection scope of this application. A person with ordinary skills in the art may recognize substantially equivalent structures or substantially equivalent acts to achieve the same results in the same manner or in a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub-combinations of the preceding elements and features.

The description is provided for clarification purposes and is not limiting. Words and phrases are to be accorded their ordinary, plain meaning unless indicated otherwise.

## Claims

1. A vehicle control system (100, 200) comprising:
a control circuitry (106, 206) configured to determine an operational schedule of the vehicle (102, 202) and monitor at least one parameter of battery (104, 204) state; and
a battery management unit (108, 208), communicatively coupled to the control circuitry (106, 206), configured to define and implement an adaptive battery threshold window based on an operational schedule of the vehicle (102, 202) and the at least one parameter of battery (104, 204) state, wherein the adaptative battery threshold window comprises multiple soft threshold values.

2. The system of claim 1, wherein the adaptive battery threshold window sits within a total usable energy window of the battery (104,204) of the vehicle, a minimum-maximum battery (104, 204) state of charge window and a high-low battery (104, 204) state of charge window.

3. The system of claim 1, wherein the adaptive battery threshold window defines a proportion of a total usable energy of a battery (104, 204) of the vehicle (102, 202) that is available for use by a set of vehicle operations, wherein each vehicle operation in the set of vehicle operations has an associated priority ranking that is variable as the battery threshold window adapts.

4. The system of claim 1, wherein the adaptive battery threshold window is at least one of a battery state of charge threshold window, battery state of energy threshold window, or battery state of health threshold window.

5. The system of claim 1, wherein the control circuitry (106, 206) is communicatively coupled to a sensor module (110, 116, 210) to monitor at least one of a temperature of an after-treatment unit (114, 212), vehicle usage of a driver (112), or a selected driving mode, and determine the operational schedule of the vehicle (102, 202).

6. The system of claim 5, wherein the battery management unit (108, 208) is configured to modify the adaptive battery threshold window based on a change in the determined operational schedule of the vehicle (102, 202), or a change in the least one determined parameter of battery (104, 204) state.

7. The system of claim 1, wherein the operational schedule of the vehicle (102, 202) includes timing, priority, and duration of at least one vehicle (102, 202) function including normal transient torque supplementation (TTS), regenerative braking, transient torque boost (TTB), coolant conditioning, fuel economy assistance, or heating of an after-treatment unit.

8. The system of claim 5, wherein the vehicle (102, 202) usage comprises at least one of an interaction with the vehicle (102, 202), driving behaviour, or a driving trend of the driver (112) learned using a machine learning algorithm over a predetermined period.

9. The system of claim 1, wherein the at least one parameter of the battery (104, 204) state includes at least one of a current state of charge, state of health, state of energy, cell temperature, overall battery (104, 204) temperature or battery (104, 204) usage history.

10. The system of claim 5, wherein the battery management unit is configured to:
store at least one driver profile including driver identification data, adaptive battery threshold window for the driver (112), and at least one of vehicle usage, or a desired driving mode of the driver (112);
identify a current driver (112); and
modify the adaptive battery threshold window based on a driver profile of the identified driver (112).

11. A vehicle control method (400, 500) comprising:
determining (402, 504) an operational schedule of the vehicle;
monitoring (404, 506) at least one parameter of battery state;
defining (406, 508) an adaptive battery threshold window based on the determined operational schedule of the vehicle and the at least one parameter of battery state; and
implementing (408, 510) the adaptive battery threshold window, wherein the adaptive battery threshold window comprises multiple soft threshold values.

12. The method of claim 11, wherein the method comprises adjusting the adaptive battery threshold window based on at least one of a determined change in the operational schedule of the vehicle or a determined change at least one parameter of battery state.

13. The method of claim 11, wherein the multiple soft threshold values include a first soft threshold value and a second soft threshold value that are each variable based on the operational schedule of the vehicle and the at least one parameter of battery state.

14. The method of claim 13, wherein the first soft threshold value is variable to a value greater than or equal to a low battery threshold value, and the second soft threshold value is variable to a value lesser than or equal to a high battery threshold value.

15. The method of claim 11, wherein determining (402) the operational schedule of the vehicle comprises:
monitoring (502a, 502b) at least one of a temperature of an after-treatment unit, vehicle usage of a driver, or a selected driving mode; and
determining (504) the operational schedule of the vehicle based on the at least one of the temperature of the after-treatment unit, vehicle usage of the driver, or the selected driving mode.
